# EUROPEAN PATENT APPLICATION

(11) **EP 4 564 520 A1**
(43) Date of publication of application: **04.06.2025**
(21) Application number: 24169829.9
(22) Date of filing: 12.04.2024
(51) Int. Cl.: H01M 10/44, H01M 10/48, H01M 10/633, H01M 10/613, H01M 10/615

(54) **BATTERY MANAGEMENT APPARATUS AND BATTERY MANAGEMENT METHOD**

(30) Priority: 01.12.2023 KR 20230172414
(71) Applicant: Samsung SDI Co., Ltd., Yongin-si, Gyeonggi-do 17084 (KR)
(72) Inventor: Kim, Hwa Su, 16678 Suwon-si, Gyeonggi-do (KR)
(74) Representative: Gulde & Partner

(57) **Abstract**

The present invention relates to a battery management apparatus including: a temperature sensor (110) measuring a temperature of each zone (1, 2, 3, 4, 5, 6, 7, 8, 9, 10, 11, 12) of each battery cell constituting a battery module; a thermal management module (120) heating or cooling each battery cell or each zone (1, 2, 3, 4, 5, 6, 7, 8, 9, 10, 11, 12) thereof; and a processor (130) calculating a maximum inter-zone temperature difference of each battery cell (dCell1 to dCellN), calculating a maximum inter-cell deviation corresponding to a maximum temperature difference between the battery cells by subtracting the smallest temperature difference (min(dCell1 to dCellN)) from the largest temperature difference (max(dCell1 to dCellN)) among the calculated maximum inter-zone temperature differences, and performing temperature control or charging current control in a predetermined manner for a weak cell corresponding to a battery cell having the largest maximum inter-zone temperature difference when the maximum inter-cell deviation is greater than a predetermined lower threshold temperature (threshold_low).

## Description

### BACKGROUND

### 1. Field

The present disclosure relates to a battery management apparatus which can prevent charging imbalance between multiple battery cells, and a battery management method using the same.

### 2. Description of the Related Art

In general, the lifespan of a battery pack (including a cell-to-pack (CTP) system) or battery module composed of one or more battery cells depends on a weak cell (or a worst cell), which has been degraded most rapidly among battery cells in the battery module (or the battery pack) and thus has a reduced lifespan.

For example, as a battery is used, there occurs a performance difference between battery cells, which accelerates degradation of a particular cell (that is, the weak cell), resulting in reduction in the lifespan of the battery module (or the battery pack) (even if the other battery cells are still in a fully usable state).

Technology that can prevent charging imbalance between multiple battery cells constituting a battery module (or a battery pack) may be desirable in order to extend the lifespan of the battery module (or the battery pack).

In addition, with increasing capacity of battery cells, there can occur a charging imbalance between zones (or regions) of one battery cell. Technology that can prevent charging imbalance between zones of a battery cell may also be desirable.

### SUMMARY

It is one aspect of the present invention to provide a battery management apparatus and method which can prevent charging imbalance between multiple battery cells constituting a battery module (or a battery pack).

It is another aspect of the present invention to provide a battery management apparatus and method which can prevent charging imbalance between multiple zones of one battery cell.

In accordance with one aspect of the present invention, a battery management apparatus includes: a temperature sensor measuring a temperature of each zone of each battery cell constituting a battery module; a thermal management module heating or cooling each battery cell or each zone thereof; and a processor calculating a maximum inter-zone temperature difference of each battery cell (dCell1 to dCellN), calculating a maximum inter-cell deviation corresponding to a maximum temperature difference between the battery cells by subtracting the smallest temperature difference (min(dCell1 to dCellN)) from the largest temperature difference (max(dCell1 to dCellN)) among the calculated maximum inter-zone temperature differences, and performing temperature control or charging current control in a predetermined manner for a weak cell corresponding to a battery cell having the largest maximum inter-zone temperature difference when the maximum inter-cell deviation is greater than a predetermined lower threshold temperature (threshold_low).

Upon performing charging current control in the predetermined manner, the processor may perform current reduction control using a difference between the maximum inter-cell deviation and a predetermined upper threshold temperature (threshold_high).

When a weighted factor (weighted_factor) becomes equal to zero as a value calculated by subtracting the maximum inter-cell deviation from the upper threshold temperature (threshold _high) becomes equal to 1 during current reduction control, the processor may stop charging without performing any further current reduction.

The weighted factor (weighted_factor) may correspond to a value obtained by transforming the value calculated by subtracting the maximum inter-cell deviation from the upper threshold temperature (threshold _high) into a log scale (Logₓ(Threshold_high - Maximum inter-cell deviation)).

Even when a temperature of a corresponding battery cell drops due to reduction in charging current during current reduction control, the processor may not immediately increase charging current as the weighted factor only changes toward a smaller value within the range defined by the predetermined upper threshold temperature (threshold _high) and the predetermined lower threshold temperature (threshold_low).

When the weighted factor (weighted_factor) is reset to 1 as the maximum inter-cell deviation becomes less than the predetermined lower threshold temperature (threshold_low) during current reduction control, the processor may resume charging and increase charging current to perform charging with an original maximum current again.

When the weighted factor does not become equal to zero as the value calculated by subtracting the maximum inter-cell deviation from the upper threshold temperature (threshold_high) does not become equal to 1 during current reduction control, the processor may perform charging while maintaining an already reduced current without stopping charging.

When the maximum inter-cell deviation becomes less than the lower threshold temperature (threshold_low) and the weighted factor (weighted_factor) is reset to 1 as the processor performs charging while maintaining the already reduced current, the processor may increase the reduced charging current to perform charging with an original maximum current.

In accordance with another aspect of the present invention, a battery management method includes: calculating, by a processor, a maximum inter-zone temperature difference (dCell1 to dCellN) of each battery cell constituting a battery module; calculating, by the processor, a maximum inter-cell deviation corresponding to a maximum temperature difference between the battery cells by subtracting the smallest temperature difference (min(dCell1 to dCellN) from the largest temperature difference (max(dCell1 to dCellN) among the calculated maximum inter-zone temperature differences (dCell1 to dCellN); and performing, by the processor, temperature control or charging current control in a predetermined manner for a weak cell corresponding to a battery cell having the largest maximum inter-zone temperature difference when the maximum inter-cell deviation is greater than a predetermined lower threshold temperature (threshold_low).

In the step of performing temperature control or charging current control in a predetermined manner, the processor may perform current reduction control using a difference between the maximum inter-cell deviation and a predetermined upper threshold temperature (threshold_high).

When a weighted factor (weighted_factor) becomes equal to zero as a value calculated by subtracting the maximum inter-cell deviation from the upper threshold temperature (threshold _high) becomes equal to 1 during current reduction control, the processor may stop charging without performing any further current reduction.

The weighted factor (weighted_factor) may correspond to a value obtained by transforming the value calculated by subtracting the maximum inter-cell deviation from the upper threshold temperature (threshold _high) into a log scale (Logₓ(Threshold_high - Maximum inter-cell deviation)).

Even when a temperature of a corresponding battery cell drops due to reduction in charging current during current reduction control, the processor may not immediately increase charging current as the weighted factor only changes toward a smaller value within the range defined by the predetermined upper threshold temperature (threshold _high) and the predetermined lower threshold temperature (threshold_low).

When the weighted factor (weighted_factor) is reset to 1 as the maximum inter-cell deviation becomes less than the predetermined lower threshold temperature (threshold_low) during current reduction control, the processor may resume charging and increase charging current to perform charging with an original maximum current again.

When the weighted factor does not become equal to zero as the value calculated by subtracting the maximum inter-cell deviation from the upper threshold temperature (threshold _high) does not become equal to 1 during current reduction control, the processor may perform charging while maintaining an already reduced current without stopping charging.

When the maximum inter-cell deviation becomes less than the lower threshold temperature (threshold_low) and the weighted factor (weighted_factor) is reset to 1 as the processor performs charging while maintaining the already reduced current, the processor may increase the reduced charging current to perform charging with an original maximum current.

The battery management apparatus and method according to the present invention may prevent or substantially prevent charging imbalance between multiple battery cells constituting a battery module (or a battery pack).

In addition, the battery management device and method according to the invention may prevent or substantially prevent charging imbalance between multiple zones of one battery cell.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic diagram of a battery management apparatus according to an embodiment of the present invention.
FIG. 2 is a flow diagram of a battery management method according to an embodiment of the present invention.
FIG. 3 is a view illustrating locations at which a temperature sensor and a thermal management module of FIG. 1 are disposed.
FIGS. 4A and 4B are diagrams illustrating a method of determining a weak cell and performing current control in relation to FIG. 2.
FIG. 5 is a diagram illustrating a method of determining a weak cell and performing temperature control therefor in relation to FIG. 2.
FIG. 6 is a diagram illustrating the timing of temperature detection operation and temperature control operation for a battery cell in reference to FIG. 2.
FIG. 7 is a flow diagram of a method of performing charging current control according to a first embodiment of the present invention.
FIG. 8A and 8B are tables illustrating a method of charging current control based on a maximum inter-cell deviation in relation to FIG. 7.
FIGS. 9A to 9E are diagrams illustrating a method of calculating temperature gradients of each zone of a battery cell with respect to surrounding temperature to perform charging current control according to a second embodiment of the present invention.
FIGS. 10A to 10C are diagrams illustrating a method of calculating an average temperature gradient of each zone of a battery cell with respect to surrounding temperature in relation to FIGS. 9A to 9E.
FIG. 11 is a flow diagram of a method of performing charging current control according to a second embodiment of the present invention.
FIGS. 12A to 12K are diagrams illustrating a method of calculating a maximum average temperature gradient between battery cells constituting a battery module using an average zonal temperature gradient of each battery cell in relation to FIG. 11.
FIGS. 13A and 13B are tables illustrating a method of charging current control depending on the maximum inter-cell deviation in relation to FIG. 11.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

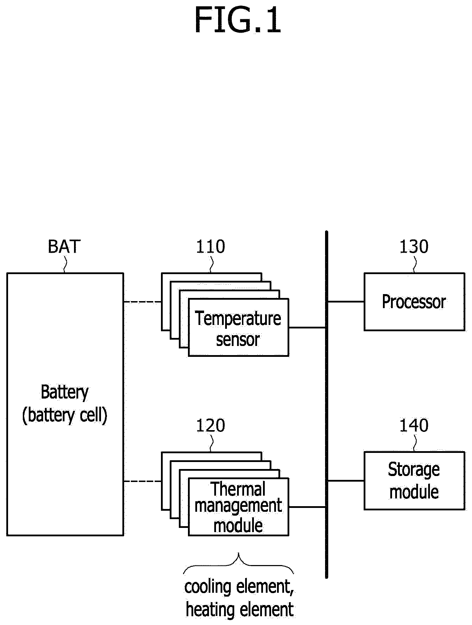

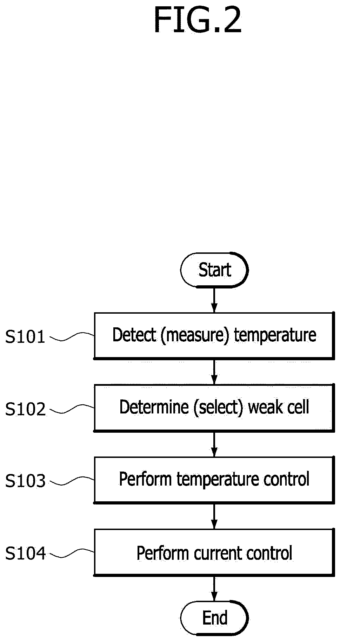

FIG. 1 is a schematic diagram of a battery management apparatus according to an embodiment of the present invention and FIG. 2 is a flow diagram of a battery management method according to an embodiment of the present invention.

Referring to FIG. 1, the battery management apparatus according to this embodiment includes a temperature sensor 110, a thermal management module 120, a processor 130, and a storage module 140.

The temperature sensor 110 measures (detects) a temperature of each zone of a battery cell.

In FIG. 1, "battery (BAT)" may refer to a battery pack (including a cell-to-pack (CTP) system) or battery module composed of one or more battery cells.

The temperature sensor 110 may include multiple temperature sensors to measure the temperature of each zone of the battery cell.

The thermal management module 120 may increase or reduce the temperature of each zone of the battery cell.

For example, the thermal management module 120 may include a cooling element (that is, a device that reduces the temperature of the battery) and a heating element (that is, a device that increases the temperature of the battery). For example, thermoelectric elements (or water blocks) may be used to increase or reduce the temperature of each zone of the battery cell.

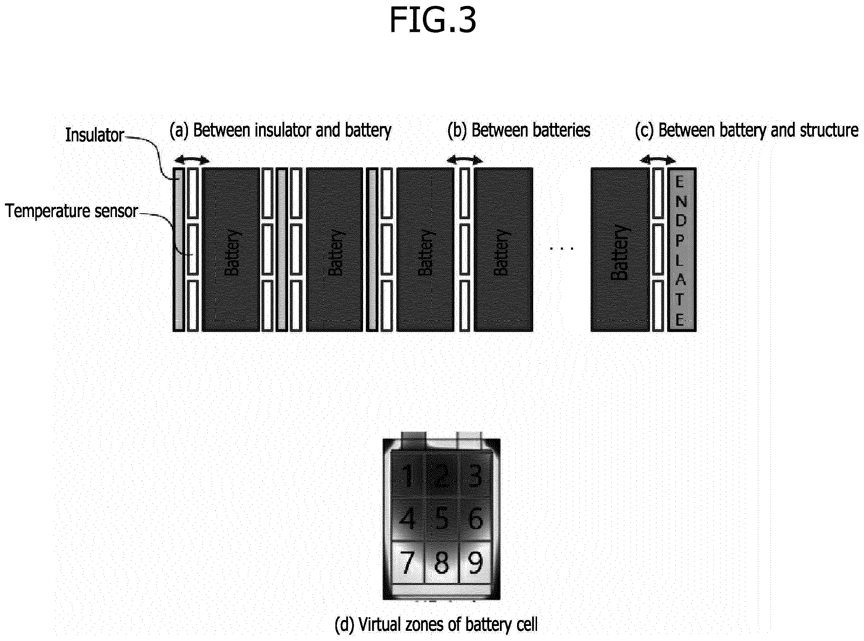

FIG. 3 is a view illustrating locations at which the temperature sensor and the thermal management module of FIG. 1 may be disposed, wherein (a) to (c) of FIG. 3 are side views of a battery module and (d) of FIG. 3 is a front view of a battery cell.

Referring to FIG. 3, in some examples, the temperature sensor 110 may be disposed between an insulator and a battery (a), between a pair of adjacent batteries (b), and between a battery and a structure (for example, an end plate) (c). In other examples, referring to FIG. 3, each battery cell may be virtually divided into multiple zones (areas) (d) and the temperature sensor 110 may be disposed in each zone of the battery cell.

Here, the thermal management module 120 may be disposed in each zone of the battery cell.

In addition, the thermal management module 120 may cool/heat each zone of the battery cell through, for example, endothermic/exothermic reactions using thermoelectric elements (or water blocks).

Here, the thermal management module 120 and the temperature sensor 110 may be disposed in non-overlapping positions to prevent errors in temperature detection (measurement).

The processor 130 may manage the temperature sensor 110 and the thermal management module 120 in an interoperable manner according to a specified algorithm.

Based on the temperature of each zone of the battery cell detected (measured) by the temperature sensor 110, the processor 130 may determine (select) a weak cell (or a worst cell) corresponding to a battery cell that has been degraded most rapidly among the multiple battery cells and has a reduced lifespan.

After determination (selection) of the weak cell (or weak zone), the processor 130 may perform at least one of the following: temperature control (for example, cooling control, heating control) and current control (for example, charging current reduction control, charging current stop control, etc.).

The storage module 140 may store an algorithm for performing current control and temperature control and data required therefor.

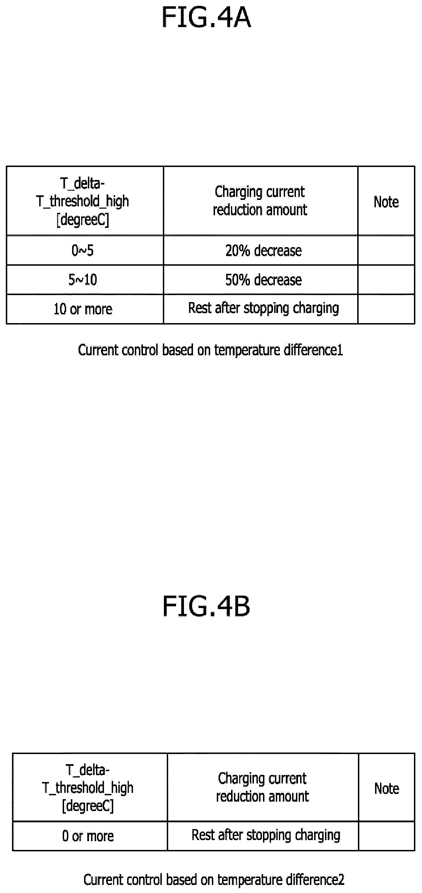

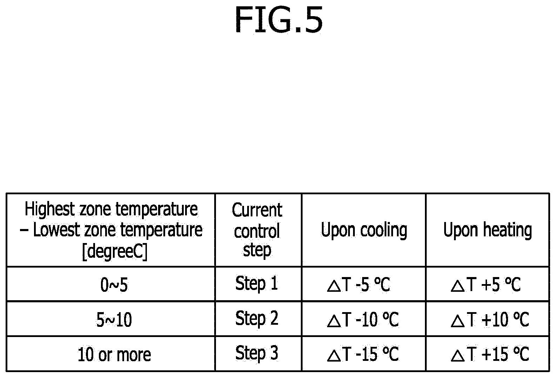

A method of performing current control and a method of performing temperature control will be described further below with reference to FIGS. 4A and 4B and FIG. 5, respectively.

In order to perform current control and temperature control, it is important to accurately determine (select) a weak cell (or a weak zone).

The processor 130 may be implemented as a central processing unit (CPU) or a system on chip (SoC), may run an operating system or an application to control multiple hardware or software components connected to the processor 130, and may perform various data processing and computation tasks. The processor 130 may be configured to execute at least one instruction stored in a memory (not shown) and to store data resulting from execution thereof in the memory.

Referring to FIG. 2, the processor 130 may detect (measure) the temperature of each zone of a battery cell through the temperature sensor 110 (S101). Based on the temperature of each zone of the battery cell detected by the temperature sensor 110, the processor 130 may determine (select) a weak cell (S102).

After determination (selection) of the weak cell, the processor 130 may perform at least one of temperature control (for example, cooling control, heating control) (see FIG. 5) and current control (for example, charging current reduction control, charging current stop control, etc.) (see FIGS. 4A and 4B) for the weak cell (S103, S104).

FIGS. 4A and 4B are diagrams illustrating a method of determining a weak cell and performing current control therefor in relation to FIG. 2.

Referring to FIGS. 4A and 4B, the processor 130 may detect a temperature of each zone of each battery cell, may calculate an inter-zone temperature difference (T_delta) through comparison of the highest zone temperature (T_max) with the lowest zone temperature (T _min), and may determine (select) a battery cell having the largest inter-zone temperature difference (T_delta) among the battery cells as a weak cell.

For example, assuming that there are three battery cells each divided into nine zones, wherein a first battery cell may have an inter-zone temperature difference (T_delta) of 10°C, as calculated through comparison between zone temperatures of the first battery cell, a second battery cell has an inter-zone temperature difference (T_delta) of 8°C, as calculated through comparison between zone temperatures of the second battery cell, and a third battery cell has an inter-zone temperature difference (T_delta) of 5°C, as calculated through comparison between zone temperatures of the third battery, the processor 130 may determine the first cell, that is, a battery cell having the largest inter-zone temperature difference (T_delta), as a weak cell.

If the inter-zone temperature difference (T_delta) of the weak cell is less than a predetermined upper threshold temperature (T_threshold_high) during battery charging, the processor 130 may allow battery charging to proceed and, if the inter-zone temperature difference (T_delta) of the weak cell is greater than or equal to the predetermined upper threshold temperature (T_threshold_high), the processor 130 may perform charging current reduction (or stop) control in a manner as shown in FIG 4A or FIG. 4B.

However, the charging current reduction (or stop) control method shown in FIGS. 4A and 4B are merely illustrative and are not intended to be limiting.

In addition, if the inter-zone temperature difference (T_delta) of the weak cell becomes less than a predetermined lower threshold temperature (T_threshold_low) after charging current is reduced (or stopped), the processor 130 may allow battery charging with a normal (non-reduced) current.

Here, the upper threshold temperature (T_threshold_high) and the lower threshold temperature (T_threshold_low) may be set through preliminary experiments or predetermined and may be varied depending on the type of battery and the capacity and characteristics thereof.

In addition, the upper threshold temperature (T_threshold_high) and the lower threshold temperature (T_threshold_low) may reflect hysteresis characteristics, and the upper threshold temperature (T_threshold_high) is set to a greater value than the lower threshold temperature (T_threshold_low).

FIG. 5 is a diagram illustrating a method of determining a weak cell and performing temperature control therefor in relation to FIG. 2.

Referring to FIG. 5, the processor 130 may detect a temperature of each zone of each battery cell, may calculate an inter-zone temperature difference (T_delta) through comparison between the highest zone temperature (T_max) and the lowest zone temperature (T _min), and may determine (select) a battery cell having the largest inter-zone temperature difference (T_delta) among the battery cells as a weak cell.

In addition, the processor 130 may calculate an average zone temperature of each battery cell.

If the inter-zone temperature difference (T_delta) of the weak cell is less than a predetermined upper control temperature (T_control_high), the processor 130 may allow battery charging to proceed.

Conversely, if the inter-zone temperature difference (T_delta) of the weak cell is greater than or equal to the predetermined upper control temperature (T_control_high), the processor 130 may perform temperature control. Here, temperature control may be performed only for the weak cell, for all battery cells, or for some specific battery cells on a zone-by-zone basis. If the inter-zone temperature difference (T_delta) of the weak cell is less than a predetermined lower control temperature (T_control_low), the processor 130 does not perform temperature control.

For example, if the average zone temperature of each battery cell (or the weak cell) is greater than a predetermined heater-on threshold temperature (T_threshold_heater_on), the processor 130 may perform cooling control in a manner as shown in FIG. 5 and, if the average zone temperature of each battery cell (or the weak cell) is less than the predetermined heater-on threshold temperature (T_threshold_heater_on), the processor 130 may perform heating control in a manner as shown in FIG. 5. However, the temperature control method shown in FIG. 5 is merely illustrative and is not intended to be limiting.

Here, the upper control temperature (T_control _high) and the lower control temperature (T_control_low) may be set through preliminary experiments and may be varied depending on the type of battery and the capacity and characteristics thereof. In addition, the upper control temperature (T_control_high) and the lower control temperature (T_control_low) may reflect hysteresis characteristics, and the upper control temperature (T_control_high) may be required to always be greater than the lower control temperature (T_control_low). Further, comparison of values of the upper threshold temperature, the lower threshold temperature, the upper control temperature, the lower control temperature may be as follows: upper threshold temperature (T_threshold_high) > upper control temperature (T_control_high) > lower threshold temperature (T_threshold_low) > lower control temperature (T_control_low).

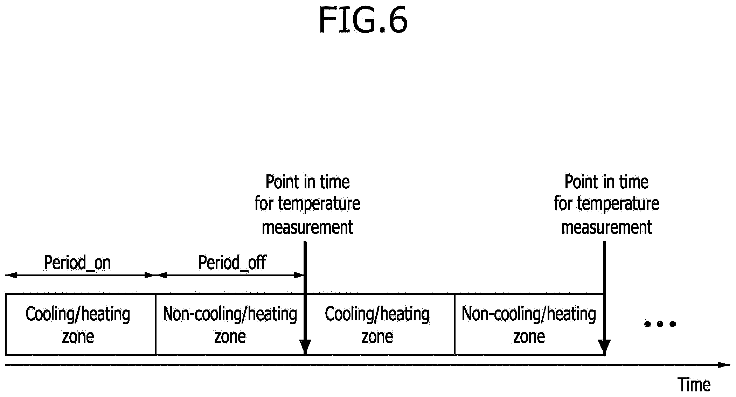

FIG. 6 is a diagram illustrating the timing of a temperature detection operation and a temperature control operation for battery cells in relation to FIG. 2.

Referring to FIG. 6, the processor 130 may perform the temperature detection operation upon lapse of a predetermined period of time (Period_off) after the temperature control operation (that is, a cooling/heating operation), rather than simultaneously performing the temperature control operation and the temperature detection operation, since performing the temperature detection (sensing) operation using the temperature sensor 110 during temperature control for each battery cell (or the weak cell) may result in large errors in temperature sensing.

In addition, when the processor does not perform the temperature control operation, the processor 130 may perform the temperature detection operation at predetermined time intervals (for example, every 1 second).

Depending on settings, the processor 130 may perform only temperature control (for example, cooling control, heating control) (see FIG. 5), only current control (for example, charging current reduction control, charging current stop control, etc.) (see FIGS. 4A and 4B), or both temperature control and current control for each battery cell (or the weak cell).

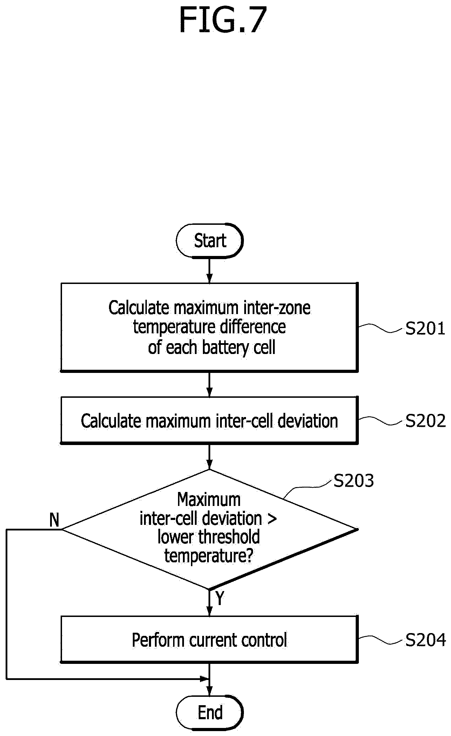

Next, a method of more accurately determining (selecting) a weak cell (that is, a weak battery cell) in a battery module composed of multiple battery cells will be described with reference to FIG. 7 to FIG. 11.

### - First embodiment

For reference, if there is a large temperature difference between a cooling part of a battery and an outside environment (for example, in the case of a bottom cooling system or the like), there may also be a large inter-zone temperature difference in one battery cell.

As a result, temperature measurement of the battery cell is highly sensitive to the surrounding environment and thus is "noisy" (that is, inaccurate). Accordingly, accuracy of current control based solely on the temperature measurement is reduced (that is, poor accuracy in determining the timing of current control may cause an increase in charging time or may make effective battery life extension difficult. Therefore, there is a need for a method of performing more accurate current control by minimizing temperature measurement noise.

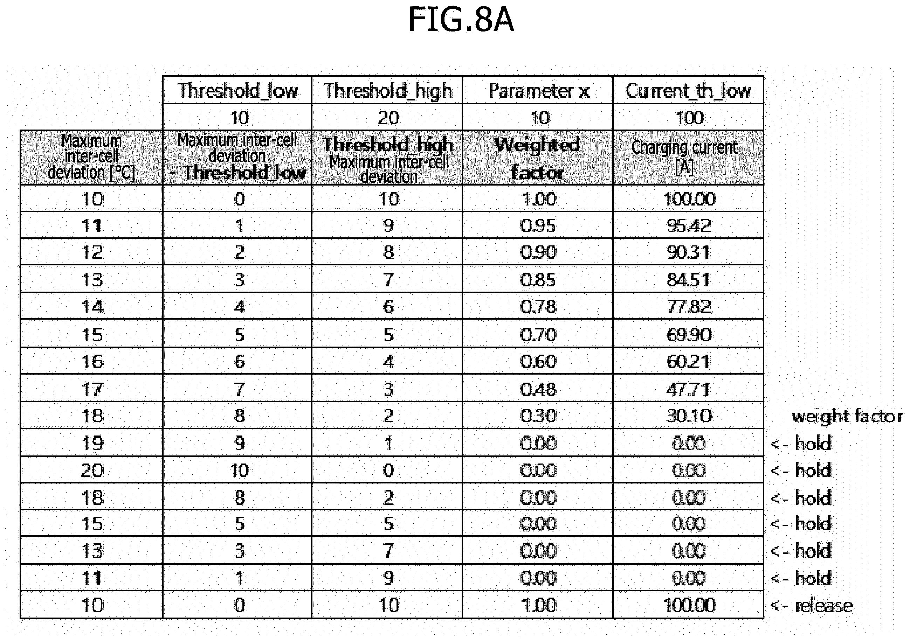

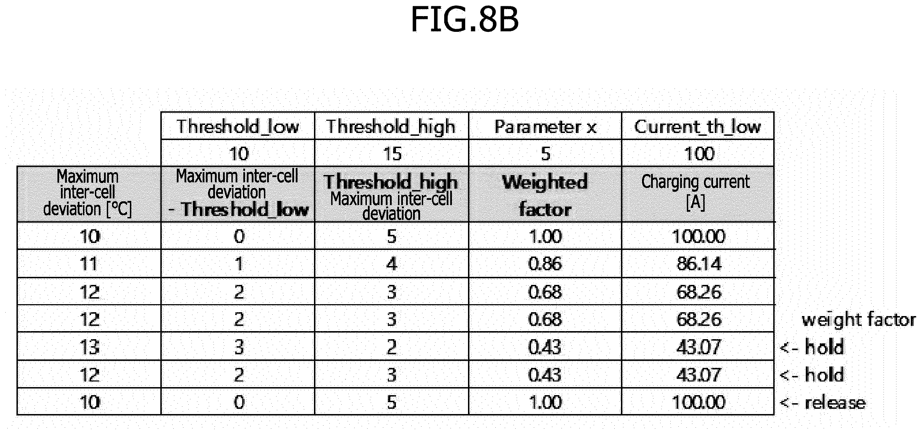

FIG. 7 is a flow diagram of a method of performing charging current control according to a first embodiment of the present invention and FIGS. 8A and 8B are tables illustrating a charging current control method based on a maximum inter-cell deviation in relation to FIG. 7.

Referring to FIG. 7, in this embodiment, the processor 130 may calculate (S201) a maximum inter-zone temperature difference (dCell1 to dCellN) of each battery cell constituting a battery module (or a battery pack). Then, the processor 130 may calculate a maximum temperature difference between the battery cells (that is, a maximum inter-cell deviation) (S202) by subtracting the smallest temperature difference (min(dCell1 to dCellN)) from the largest temperature difference (max(dCell1 to dCellN) among the calculated maximum inter-zone temperature differences (dCell1 to dCellN) of the battery cells. If the maximum temperature difference between the battery cells (that is, the maximum inter-cell deviation) is greater than a predetermined lower threshold temperature (threshold_low) (if Yes is selected in step S203), the processor 130 may perform charging current control as shown in FIGS. 8A and 8B for a weak cell (that is, a battery cell having the largest inter-zone temperature difference) (S204).

For reference, the lower threshold temperature (threshold_low) may be a temperature at which significant current draw is expected to occur and the upper threshold temperature (threshold _high) may be a temperature at which internal degradation of a battery cell becomes severe due to current draw. Here, the lower threshold temperature and the upper threshold temperature may be, for example, set through preliminary experiments.

In addition, at the moment when the maximum temperature difference between the battery cells (that is, the maximum inter-cell deviation) exceeds the lower threshold temperature (threshold_low), the processor 130 stores a current charging current value as a lower threshold current (Current_th_low).

Referring to FIGS. 8A and 8B, the processor 130 may perform current reduction control based on a difference between the maximum temperature difference between the battery cells (that is, the maximum inter-cell deviation) and the predetermined upper threshold temperature (threshold _high).

Here, a parameter value (parameter x) may be calculated by subtracting the lower threshold temperature (threshold_low) from the upper threshold temperature (threshold _high), a weighted factor (weighted_factor) may be calculated by transforming a value obtained by subtracting the maximum temperature difference between the battery cells (that is, the maximum inter-cell deviation) from the upper threshold temperature (threshold_high) into a log scale (that is, Logₓ(Threshold_high - Maximum inter-cell deviation)), and charging current may be calculated by subtracting the weighted factor (weighted_factor) from a lower threshold current (Current_th_low).

Referring to FIG. 8A, if a value obtained by subtracting the maximum temperature difference between the battery cells (that is, the maximum inter-cell deviation) from the upper threshold temperature (threshold _high) becomes 1 (that is, if the weighted factor becomes zero) during current reduction control by the processor 130, the processor 130 may stop charging without performing any further current reduction ("hold" in FIG. 8A).

Here, the weighted factor (weighted_factor) may only change toward a smaller value within the range defined by the upper threshold temperature (threshold-high) and the lower threshold temperature (threshold-low). That is, even when the battery temperature drops due to reduction in charging current, the processor 130 may not immediately increase charging current in order to sufficiently reduce the inter-zone temperature difference of a battery cell in which a problem has occurred (that is, a weak cell).

However, if the maximum temperature difference between the battery cells (that is, the maximum inter-cell deviation) becomes less than the lower threshold temperature (threshold_low) and thus the weighted factor (weighted_factor) is reset to 1, the processor 130 may resume charging ("release" in FIG. 8A).

Comparing FIG. 8A with FIG. 8B, in FIG. 8B, a value obtained by subtracting the maximum temperature difference between the battery cells (that is, the maximum inter-cell deviation) from the upper threshold temperature (threshold _high) may not become 1 (that is, the weighted factor may not become zero) and the processor 130 may maintain an already reduced current (for example, 43.07 A) ("hold" in FIG. 8B), rather than stopping charging. Then, when the maximum temperature difference between the battery cells (that is, the maximum inter-cell deviation) becomes less than the lower threshold temperature (threshold_low) and thus the weighted factor (weighted_factor) is reset to 1, the processor 130 may increase charging current to perform charging with an original maximum current (for example, 100.00 A).

However, the current control method shown in FIGS. 8A and 8B are merely illustrative and are not intended to be limiting.

### -Second embodiment-

There may be cases where it is difficult to determine the presence of a current draw-induced temperature difference based solely on the maximum temperature difference between battery cells (that is, the maximum inter-cell deviation) described above. For example, in a battery module with a bottom cooling system, there can be a temperature difference between lower and upper portions of a battery cell due to the effect of cooling operation of the bottom cooling system, rather than there being a temperature difference due to the effect of current draw. Accordingly, in order to determine temperature increase (that is, heat) caused by electric current being drawn to a particular zone of a battery cell, this embodiment uses an average temperature gradient of each cell of a battery cell with respect to surrounding temperature (that is, an average temperature difference between each zone of a battery cell and surrounding zones thereof).

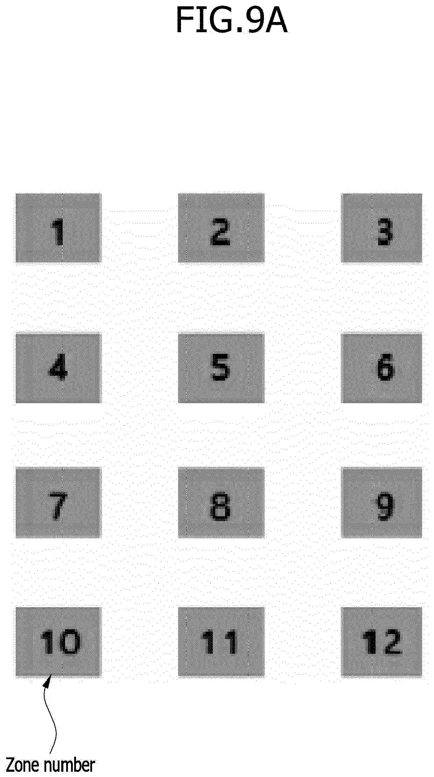

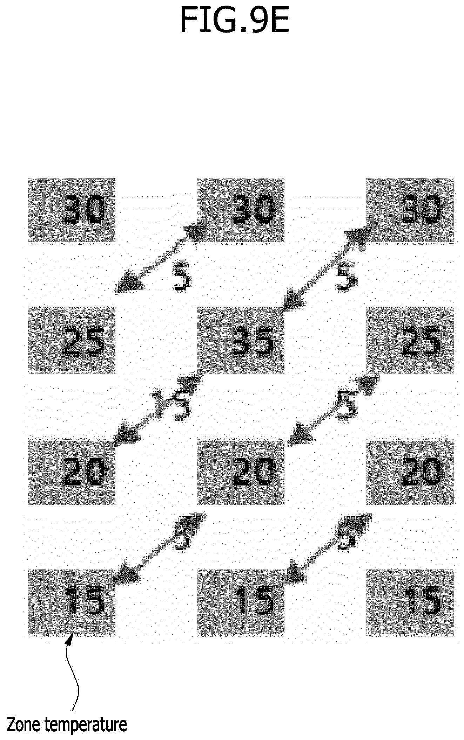

FIGS. 9A to 9E are diagrams illustrating a method of calculating a temperature gradient of each zone of a battery cell with respect to surrounding temperature (that is, a temperature difference between each zone of a battery cell and surrounding zones thereof) in order to perform charging current control according to a second embodiment of the present invention.

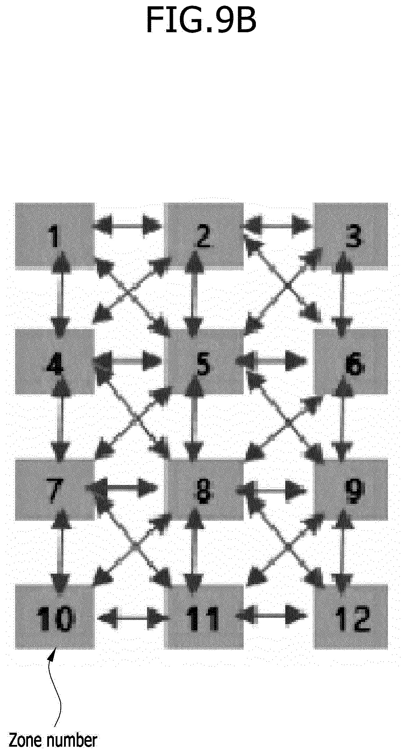

Assuming that one battery cell is divided into 12 zones, as shown in FIG. 9A, a temperature gradient of each zone of the battery cell with respect to surrounding temperature may be calculated, as shown in FIG. 9B (that is, the temperature gradient is an absolute value and a total of 29 temperature gradient values is generated for 12 zones).

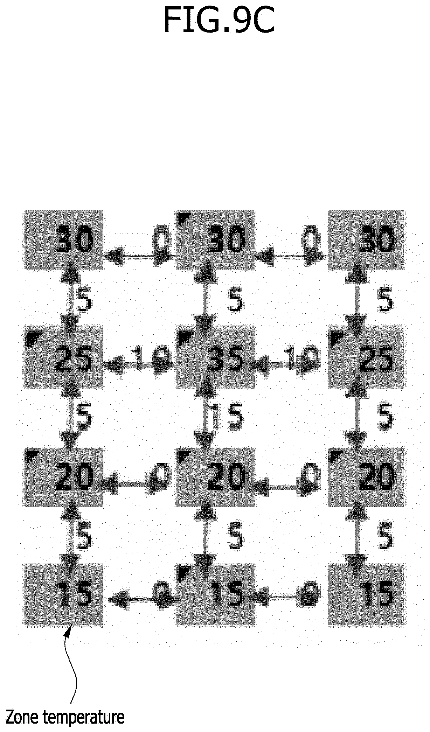

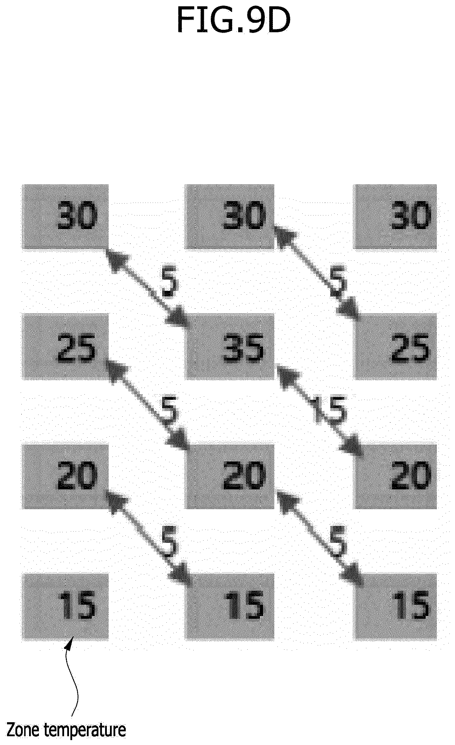

In addition, assuming that temperature values of 12 zones are as shown in FIG. 9C to FIG. 9E, a temperature gradient (that is, a temperature difference between each zone of the battery cell and surrounding zones thereof) is present between upper and lower zones and between right and left zones, as shown in FIG. 9C. In addition, a temperature gradient (that is, a temperature difference between each zone of the battery cell and surrounding zones thereof) is also present between zones facing each other in a first diagonal direction and a second diagonal direction, as shown in FIG. 9D to FIG. 9E.

Accordingly, the number of surrounding zones that need to be considered to calculate an average temperature gradient of each zone of the battery cell with respect to surrounding temperature (that is, an average temperature difference between each zone of the battery cell and surrounding zones thereof) may vary depending on the location of each zone of the battery cell.

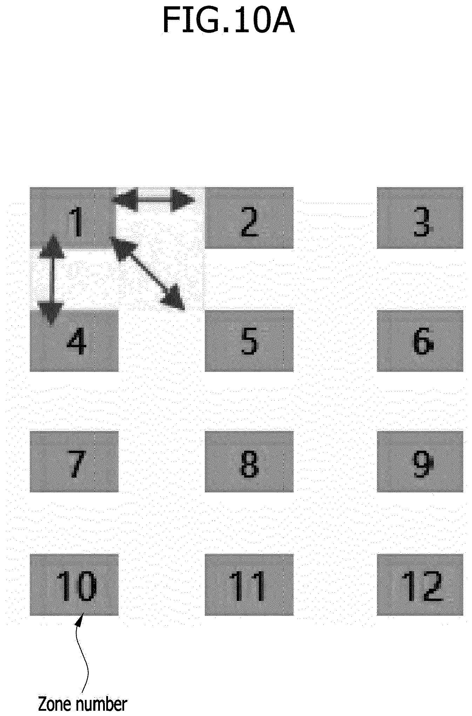

FIGS. 10A to 10C are diagrams illustrating a method of calculating the average temperature gradient of each zone of the battery cell with respect to surrounding temperature (that is, the average temperature difference between each zone of the battery cell and surrounding zones thereof) in relation to FIGS. 9A to 9E.

Referring to FIG. 10A, for zones at the corners of the battery cell (for example, zones 1, 3, 10, and 12), the processor 130 calculates the average temperature gradient of each zone of the battery cell with respect to surrounding temperature (that is, the average temperature difference between each zone of the battery cell and surrounding zones thereof) based on the temperatures of three surrounding zones.

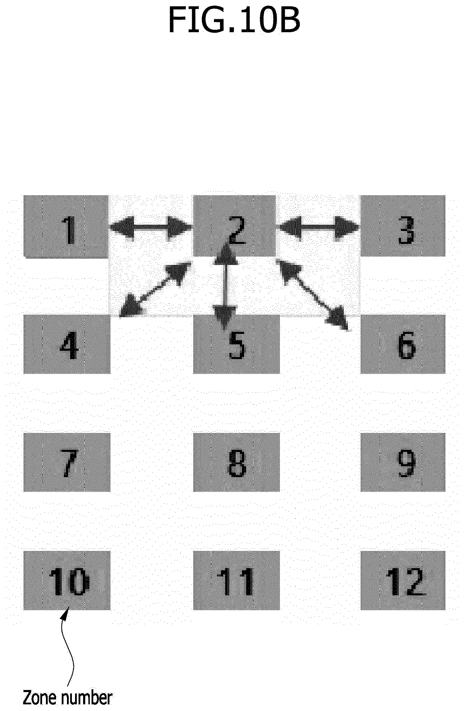

Referring to FIG. 10B, for zones at the sides of the battery cell (for example, zones 2, 4, 6, 7, 9, and 11), the processor 130 calculates the average temperature gradient of each zone of the battery cell with respect to surrounding temperature (that is, the average temperature difference between each zone of the battery cell and surrounding zones thereof) based on the temperatures of five surrounding zones.

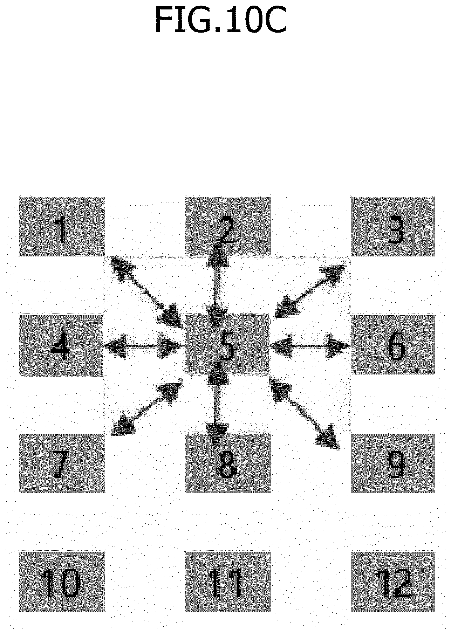

Referring to FIG. 10C, for the remaining zones (for example, zones 5 and 8) other than the zones at the corners and sides of the battery cell, the processor 130 calculates the average temperature gradient of each zone of the battery cell with respect to surrounding temperature (that is, the average temperature difference between each zone of the battery cell and surrounding zones thereof) based on the temperatures of eight surrounding zones.

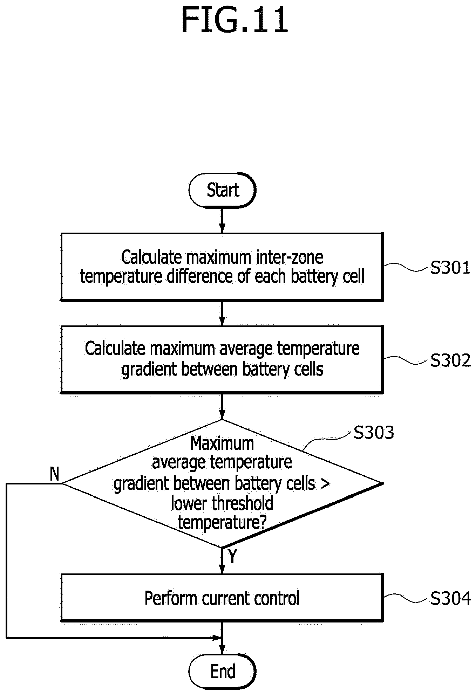

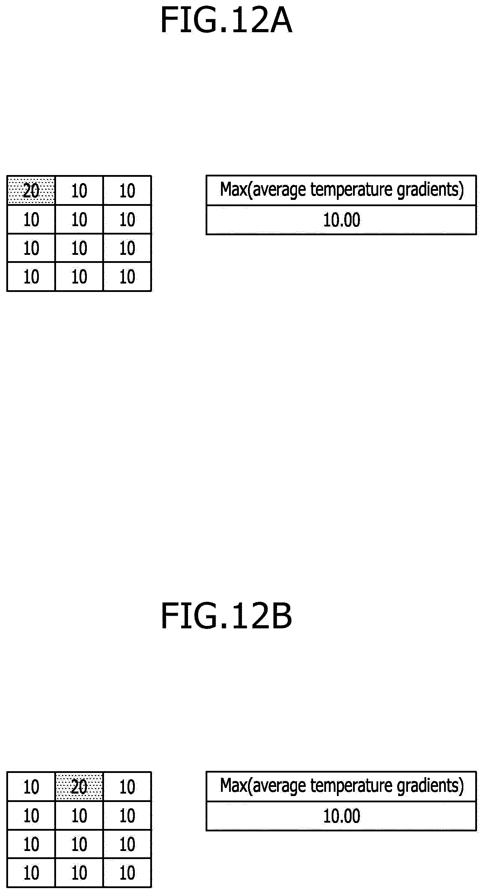

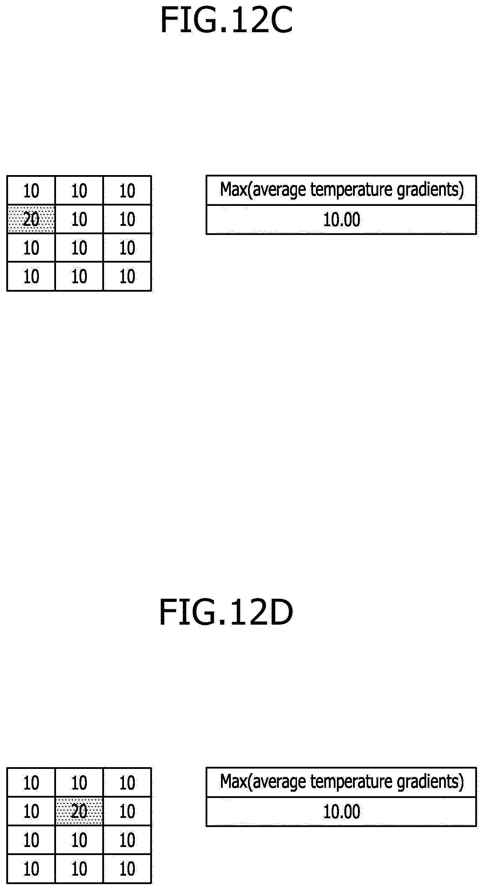

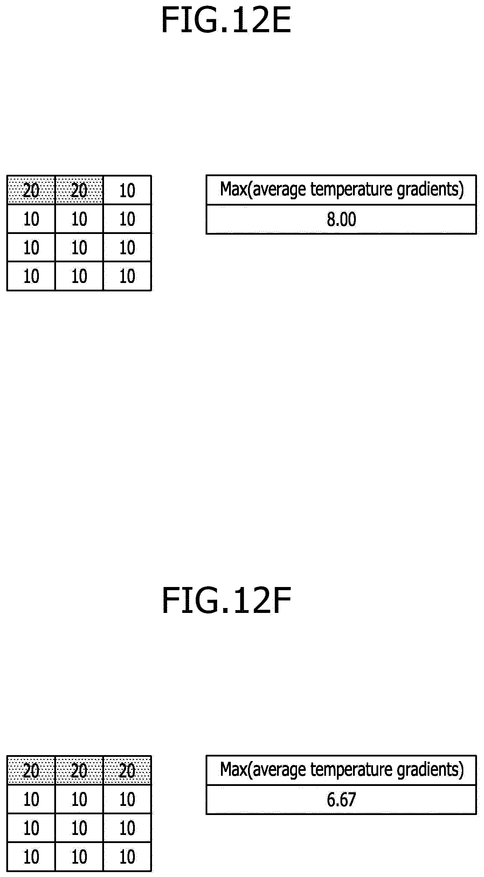

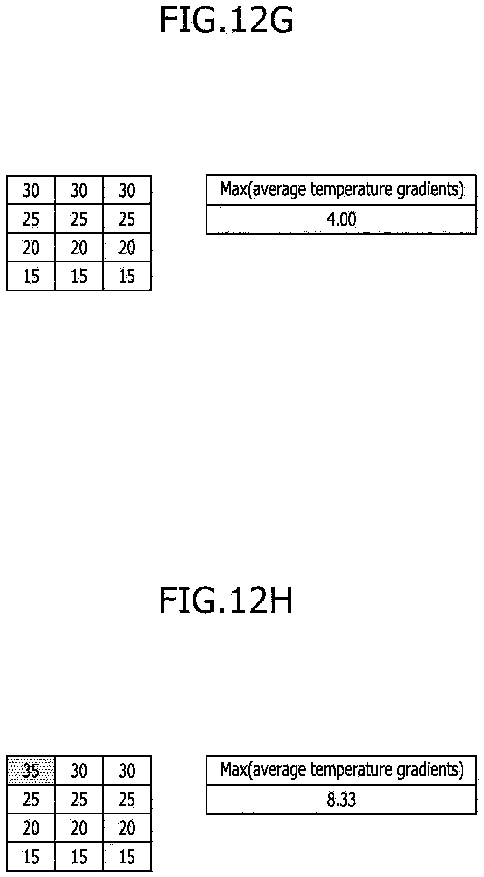

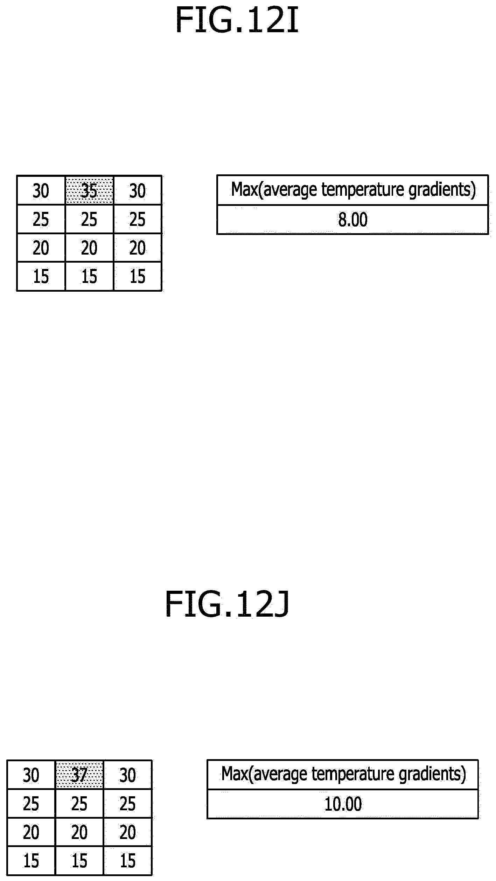

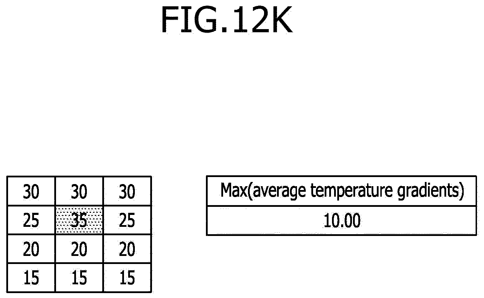

FIG. 11 is a flow diagram of a method of performing charging current control according to a second embodiment of the present invention, and FIGS. 12A to 12K are diagrams illustrating a method of calculating a maximum average temperature gradient between battery cells constituting a battery module using the average temperature gradient of each zone of each battery cell with respect to surrounding temperature (that is, the average temperature difference between each zone of the battery cell and surrounding zones thereof) in relation to FIG. 11.

Referring to FIG. 12A to FIG. 12K, the processor 130 may calculate a maximum average zonal temperature gradient (the largest value among the average temperature differences between each zone of a battery cell and surrounding zones thereof) (gCell1 to gCellN) for each of multiple battery cells (for example, 10 battery cells) constituting a battery module (S301).

For example, referring to FIG. 12A to FIG. 12K, maximum average zonal temperature gradients of the first to tenth battery cells (gCell1 to gCellN) may be 10.00, 10.00, 10.00, 10.00, 8.00, 6.67, 4.00, 8.33, 8.00, 10.00, and 10.00, respectively.

Then, the processor 130 may calculate a maximum average temperature gradient between the battery cells (max(gCell1 to gCellN)) among the maximum average zonal temperature gradients (gCell1 to gCellN) of the battery cells (the average temperature differences between each zone of a battery cell and surrounding zones thereof) (S302).

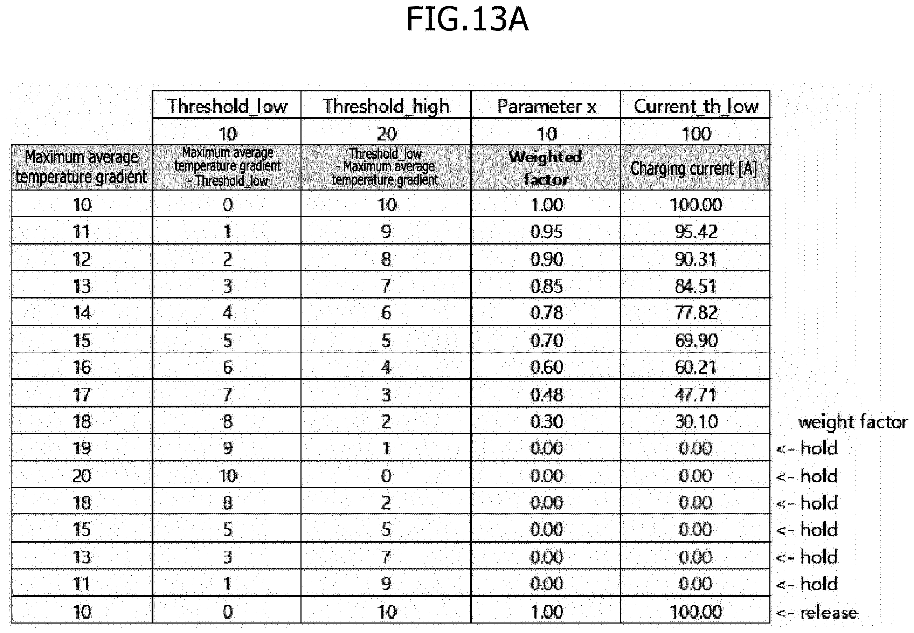

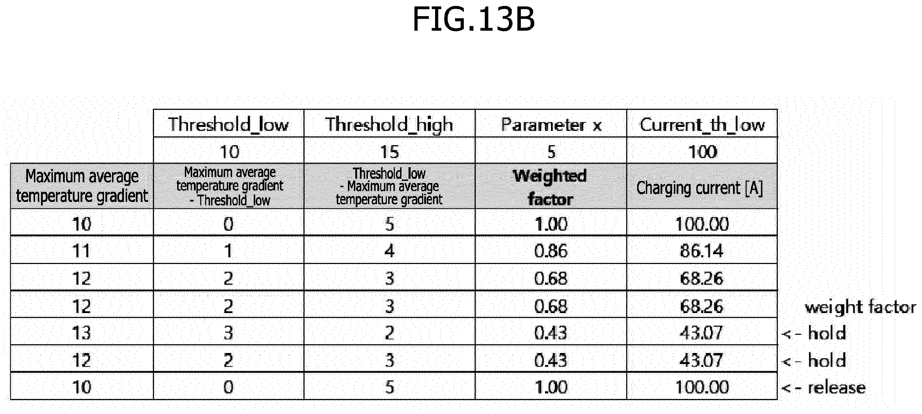

When the maximum average temperature gradient between the battery cells (max(gCell1 to gCellN)) is greater than a predetermined lower threshold temperature (threshold_low) (if Yes is selected in S303), the processor 130 may perform charging current control as shown in FIGS. 13A and 13B for a weak cell (that is, a battery cell having the largest temperature difference) (S304).

FIGS. 13A and 13B are tables illustrating a method of charging current control based on a maximum inter-cell deviation in relation to FIG.11.

For reference, the lower threshold temperature (threshold_low) may be a temperature at which significant current draw is expected to occur and the upper threshold temperature (threshold _high) may be a temperature at which internal degradation of a battery cell becomes severe due to current draw. Here, the lower threshold temperature and the upper threshold temperature may be, for example, set through preliminary experiments.

In addition, at the moment when the maximum average temperature gradient between the battery cells (max(gCell1 to gCelln) exceeds the lower threshold temperature (threshold_low), the processor may store a current charging current value as a lower threshold current (Current_th_low).

Referring to FIGS. 13A and 13B, the processor 130 may perform current reduction control using a difference between the maximum average temperature gradient between the battery cells (max(gCell1 to gCellN)) and the predetermined upper threshold temperature (threshold_high).

Here, a parameter value (parameter x) may be calculated by subtracting the lower threshold temperature (threshold_low) from the upper threshold temperature (threshold_high), and a weighted factor (weighted_factor) may be calculated by transforming a value obtained by subtracting the maximum average temperature gradient between the battery cells (max(gCell1 to gCellN)) from the upper threshold temperature (threshold _high) into a log scale (that is, Logₓ(Threshold_high - Maximum average temperature gradient)), and charging current may be calculated by subtracting the weighted factor (weighted_factor) from the lower threshold current (Current_th_low).

Referring to FIG. 13A, when a value obtained by subtracting the maximum average temperature gradient between the battery cells (max(gCell1 to gCellN)) from the upper threshold temperature (threshold _high) becomes equal to 1 (that is, when the weighted factor becomes equal to zero) during current attenuation control, the processor 130 may stop charging without performing any further current reduction ("hold" in FIG. 13A).

Here, the weighted factor (weighted_factor) may only change toward a smaller value within the range defined by the upper threshold temperature (threshold-high) and the lower threshold temperature (threshold-low). That is, even when the battery temperature drops due to reduction in charging current, the processor 130 may not immediately increase charging current in order to sufficiently reduce the inter-zone temperature difference of a battery cell in which a problem has occurred (that is, a weak cell).

However, if the maximum average temperature gradient between the battery cells (max(gCell1 to gCellN)) becomes less than the lower threshold temperature (threshold_low) and thus the weighted factor (weighted_factor) is reset to 1, the processor 130 may resume charging ("release" in FIG. 13A).

Comparing FIG. 13A with FIG. 13B, in FIG. 13B, the value obtained by subtracting the maximum average temperature gradient between the battery cells (max(gCell1 to gCellN)) from the upper threshold temperature (threshold _high) does not become equal to 1 (that is, the weighted factor does not become equal to zero) and the processor 130 may maintain an already reduced current (for example, 43.07 A) ("hold" in FIG. 13B) without stopping charging. Then, when the maximum average temperature gradient between the battery cells (max(gCell1 to gCellN)) becomes less than the lower threshold temperature (threshold_low) and thus the weighted factor (weighted_factor) is reset to 1, the processor 130 may increase charging current to perform charging with an original maximum current (for example, 100.00 A) again.

However, the current control method of FIGS. 13A and 13B is merely illustrative and is not intended to be limiting.

In general, charging a battery module at the lowest possible rate takes an excessively long time to complete despite the advantage of reducing temperature imbalance between battery cells. According to embodiments of the present invention, shortened charging time and extended battery life may be ensured through reduction in partial degradation of the battery cells by accurately determining the timing of current control, that is, by performing charging with a normal current before the temperature imbalance between the battery cells increases above a threshold value and performing charging current control after the temperature imbalance between the battery cells increases above the threshold value.

According to the present invention, when there is a temperature imbalance between the battery cells during charging, the temperature imbalance can be resolved aggressively rather than by limiting charging current, thereby reducing degradation of the battery cells while shortening the time required to complete charging.

As used herein, "part" or "module" may include a unit implemented in hardware, software, or firmware, and may be used interchangeably with terms, for example, logic, logic block, component, or circuit. A "part" or "module" may be an integrally formed part or a minimal unit or portion of the part that performs one or more functions. For example, according to an embodiment, the "part" or "module" may be implemented in the form of an Application-Specific Integrated Circuit (ASIC).

The embodiments described herein may be implemented, for example, as a method or process, a device, a software program, a data stream, or a signal. Although discussed in the context of a single type of implementation (for example, discussed only as a method), features discussed herein may also be implemented in other forms (for example, a device or a program). The device may be implemented by suitable hardware, software, firmware, and the like. The method may be implemented on a device, such as a processor that generally refers to a processing device including a computer, a microprocessor, an integrated circuit, a programmable logic device, etc. The processor includes a communication device such as a computer, a cell phone, a personal digital assistant (PDA), and other devices that facilitate communication of information between the device and end-users.

Although the present invention has been described with reference to some embodiments and drawings illustrating aspects thereof, the present invention is not limited thereto. Various modifications and variations can be made by a person skilled in the art to which the present invention belongs within the scope of the technical scope of the invention and the claims and equivalents thereto.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it is to be understood by those of skill in the art that various changes in form and details may be made without departing from the scope of the present invention as set forth in the appended claims.

## Claims

1. A battery management apparatus comprising:
a temperature sensor (110) configured to measure a temperature of each zone (1, 2, 3, 4, 5, 6, 7, 8, 9, 10, 11, 12) of each battery cell constituting a battery module;
a thermal management module (120) configured to heat or cool each battery cell or each zone (1, 2, 3, 4, 5, 6, 7, 8, 9, 10, 11, 12) thereof; and
a processor (130) configured to calculate a maximum inter-zone temperature difference of each battery cell (dCell1 to dCellN), calculate a maximum inter-cell deviation corresponding to a maximum temperature difference between the battery cells by subtracting the smallest temperature difference (min(dCell1 to dCellN)) from the largest temperature difference (max(dCell1 to dCellN)) among the calculated maximum inter-zone temperature differences, and perform temperature control or charging current control in a predetermined manner for a weak cell corresponding to a battery cell having the largest maximum inter-zone temperature difference when the maximum inter-cell deviation is greater than a predetermined lower threshold temperature (threshold_low).

2. The battery management apparatus according to claim 1, wherein, upon performing charging current control in the predetermined manner, the processor (130) performs current reduction control using a difference between the maximum inter-cell deviation and a predetermined upper threshold temperature (threshold_high).

3. The battery management apparatus according to claim 2, wherein, when a weighted factor (weighted_factor) becomes equal to zero as a value calculated by subtracting the maximum inter-cell deviation from the upper threshold temperature (threshold_high) becomes equal to 1 during current reduction control, the processor (130) stops charging without performing any further current reduction.

4. The battery management apparatus according to claim 3, wherein the weighted factor (weighted_factor) corresponds to a value obtained by transforming the value calculated by subtracting the maximum inter-cell deviation from the upper threshold temperature (threshold _high) into a log scale (Logₓ(Threshold_high - Maximum inter-cell deviation)).

5. The battery management apparatus according to claim 3, wherein, even when a temperature of the weak cell drops due to reduction in charging current during current reduction control, the processor (130) does not immediately increase charging current as the weighted factor only changes toward a smaller value within the range defined by the predetermined upper threshold temperature (threshold_high) and the predetermined lower threshold temperature (threshold_low).

6. The battery management apparatus according to claim 5, wherein, when the weighted factor (weighted_factor) is reset to 1 as the maximum inter-cell deviation becomes less than the predetermined lower threshold temperature (threshold_low) during current reduction control, the processor (130) resumes charging and increases charging current to perform charging with an original maximum current again.

7. The battery management apparatus according to claim 3, wherein, when the weighted factor does not become equal to zero as the value calculated by subtracting the maximum inter-cell deviation from the upper threshold temperature (threshold _high) does not become equal to 1 during current reduction control, the processor (130) performs charging while maintaining an already reduced current without stopping charging.

8. The battery management apparatus according to claim 7, wherein, when the maximum inter-cell deviation becomes less than the lower threshold temperature (threshold_low) and the weighted factor (weighted_factor) is reset to 1 as the processor (130) performs charging while maintaining the already reduced current, the processor (130) increases the reduced charging current to perform charging with an original maximum current.

9. A battery management method comprising:
calculating, by a processor (130), a maximum inter-zone temperature difference (dCell1 to dCellN) of each battery cell constituting a battery module;
calculating, by the processor (130), a maximum inter-cell deviation corresponding to a maximum temperature difference between the battery cells by subtracting the smallest temperature difference (min(dCell1 to dCellN) from the largest temperature difference (max(dCell1 to dCellN) among the calculated maximum inter-zone temperature differences (dCell1 to dCellN); and
performing, by the processor (130), temperature control or charging current control in a predetermined manner for a weak cell corresponding to a battery cell having the largest maximum inter-zone temperature difference when the maximum inter-cell deviation is greater than a predetermined lower threshold temperature (threshold_low).

10. The battery management method according to claim 9, wherein, in the step of performing temperature control or charging current control in a predetermined manner, the processor (130) performs current reduction control using a difference between the maximum inter-cell deviation and a predetermined upper threshold temperature (threshold_high).

11. The battery management method according to claim 10, wherein, when a weighted factor (weighted_factor) becomes equal to zero as a value calculated by subtracting the maximum inter-cell deviation from the upper threshold temperature (threshold_high) becomes equal to 1 during current reduction control, the processor (130) stops charging without performing any further current reduction.

12. The battery management method according to claim 11, wherein the weighted factor (weighted_factor) corresponds to a value obtained by transforming the value calculated by subtracting the maximum inter-cell deviation from the upper threshold temperature (threshold _high) into a log scale (Logₓ(Threshold_high - Maximum inter-cell deviation)).

13. The battery management method according to claim 11, wherein, even when a temperature of a corresponding battery cell drops due to reduction in charging current during current reduction control, the processor (130) does not immediately increase charging current as the weighted factor only changes toward a smaller value within the range defined by the predetermined upper threshold temperature (threshold _high) and the predetermined lower threshold temperature (threshold_low).

14. The battery management method according to claim 11, wherein, when the weighted factor does not become equal to zero as the value calculated by subtracting the maximum inter-cell deviation from the upper threshold temperature (threshold _high) does not become equal to 1 during current reduction control, the processor (130) performs charging while maintaining an already reduced current without stopping charging.

15. The battery management method according to claim 14, wherein, when the maximum inter-cell deviation becomes less than the lower threshold temperature (threshold_low) and the weighted factor (weighted_factor) is reset to 1 as the processor (130) performs charging while maintaining the already reduced current, the processor (130) increases the reduced charging current to perform charging with an original maximum current.
